## Europäisches Patentamt

## European Patent Office

## Office européen des brevets

(11) Veröffentlichungsnummer: **0 322 478**
**A1**

(12) **EUROPÄISCHE PATENTANMELDUNG**

(21) Anmeldenummer: **87119358.7**

(51) Int. Cl.⁴: **C02F 1/46**

(22) Anmeldetag: **30.12.87**

(43) Veröffentlichungstag der Anmeldung:
**05.07.89 Patentblatt 89/27**

(84) Benannte Vertragsstaaten:
**AT BE CH DE ES FR GB GR IT LI LU NL SE**

(71) Anmelder: **Wilms, Kay**
**Ahrensfelder Weg 57**
**D-2070 Ahrensburg(DE)**

Anmelder: **Zielinski, E.**
**Gustav-Adolf Strasse 34**
**D-2000 Hamburg 70(DE)**

Anmelder: **Meyer, Heinz R.**
**Blankeneser Hauptstrasse 32**
**D-2000 Hamburg 55(DE)**

Anmelder: **Irmler, Udo**
**Königstrasse 5**
**D-2358 Kaltenkirchen(DE)**

Anmelder: **Abraham, Josef**
**Eichenstrasse 54**
**D-2000 Hamburg 20(DE)**

Anmelder: **Reiners, Harald**
**Loogestrasse 26**
**D-2000 Hamburg 20(DE)**

(72) Erfinder: **Wilms, Kay**
**Ahrensfelder Weg 57**
**D-2070 Ahrensburg(DE)**

(74) Vertreter: **Richter, Werdermann & Gerbaulet**
**Neuer Wall 10**
**D-2000 Hamburg 36(DE)**

(54) **Verfahren und Vorrichtung zur Aufbereitung von Wasser, insbesondere zur Herstellung von keimfreiem Trinkwasser, durch anodische Oxidation.**

(57) Die Wasseraufbereitungsvorrichtung (100) besteht aus einer in einem geschlossenen Gehäuse (10) mit ventilgesteuertem Wassereinlauf, Wasseraustritt und Wasserablauf angeordneten Reaktionszelle (20), in deren Reaktionskammer (25) eine Anzahl von positiven und negativen Elektrodenplatten (30 bis 35;130 bis 134) aus einem Netzgitter aus mit Platin beschichetetem Titan in wechselnder Reihenfolge in Abständen voneinander und übereinanderliegend angeordnet sind, die über Stromzuführungsleitungen unter Zwischenschaltung einer Steuereinrichtung (50) zum ständigen Umpolen der Elektroden während des Reaktionsvorganges mit einer Gleichstromquelle verbunden sind, wobei der Abstand der Elektroden (30 bis 35; 130 bis 134) den jeweiligen Wasserqualitäten (Leitfähigkeiten) anpaßbar ist

EP 0 322 478 A1

(Fig.1).

## Verfahren und Vorrichtung zur Aufbereitung von Wasser, insbesondere zur Herstellung von keimfreiem Trinkwasser, durch anodische Oxidation.

Da der Bedarf an hochwertigem Wasser weltweit steigt, und zwar bedingt durch wachsende Industrialisierung, stetige Bevölkerungszunahme und anspruchsvolleren Lebensstandard und da die Verfügbarkeit qualitativ einwandfreier Wasservorkommen kontinuierlich abnimmt, muß immer häufiger auf Rohwasser zurückgegriffen werden, das aufbereitet und vor allem entkeimt werden muß.

Mit der anodischen Oxidation stehen Verfahren zur Verfügung, mit denen es möglich ist, allein oder in Kombination mit bekannten Aufbereitungsverfahren eine Vielzahl von Wasserarten wirkungsvoll zu entkeimen und zu desinfizieren. Die bekannte elektrochemische Wasserentkeimung durch anodische Oxidation beruht primär auf dem elektrochemischen Elektronenentzug an der positivpolarisierten Elektrode (Anode) durch elektrischen Gleichstrom. Durch diesen Prozeß werden aus den Wasserbestandteilen zunächst atomarer Sauerstoff sowie langlebige Oxidantien gebildet. Der nur kurzzeitig beständige atomare Sauerstoff als stärkstes natürliches Oxidationsmittel bewirkt eine primäre Oxidation noch im Anodennahbereich. Die dabei sekundär gebildeten, langlebigen Oxidantien auf der Basis von Peroxo- und Hypochlorit-Verbindungen führen dabei zur irreversiblen Abtötung und Inaktivierung von Bakterien, Viren und anderen Mikroorganismen in der Nachwirkphase.

Die Erfindung löst die Aufgabe, ein Verfahren und eine Vorrichtung zu schaffen, mit denen unter Anwendung der anodischen Oxidation mit einem geringsten Energieaufwand und kostensparend hochwertiges, insbesondere keimfreies Wasser herzustellen, und zwar in Form einer leicht zu transportierenden und an jedem Ort der Erde einsetzbaren Wasseraufbereitungseinheit, und zwar unabhängig von der Qualität (Leitfähigkeit) des jeweils aufzubereitenden Wassers mit der Möglichkeit einer jeweiligen Anpassung des Verfahrens und der Vorrichtung an die Qualität des jeweils aufzubereitenden Wassers zur Erzielung eines höchstmaßes an Wirkungsgrad und Entkeimungssicherheit.

Zur Lösung dieser Aufgabe wird eine Vorrichtung zur Aufbereitung von Wasser, insbesondere zur Herstellung von keimfreiem Trinkwasser, durch anodische Oxidation vorgeschlagen, die erfindungsgemäß aus einem behälterartigen, allseitig geschlossenen Gehäuse, das mit einem Wassereinlaufstutzen, mit einem Wasseraustrittsstutzen und mit einem Wasserablaufstutzen versehen ist, wobei der Wassereinlaufstutzen, der Wasseraustrittsstutzen und der Wasserablaufstutzen mit je einem den Wasserzulauf und den Wasserablauf steuerbaren Ventil versehen sind, und einer in dem Innenraum des Gehäuses senkrecht stehend angeordneten, beidseitig offen ausgebildeten, in ihrem Innenraum eine Reaktionskammer bildenden Reaktionszelle besteht, die als beidseitig offenes, röhrenförmiges Gehäuse ausgebildet ist und deren obere Öffnung mit dem Wasseraustrittsstutzen verbunden ist, wobei die Reaktionszelle in dem Innenraum des Gehäuses unter Ausbildung eines seitlichen und bodenseitigen Zwischenraumes angeordnet ist, und daß die Reaktionszelle in ihrem Innenraum eine Anzahl von zueinander elektrisch isolierten und in feststehenden oder veränderbaren Abständen voneinander angeordneten waagerechten, plattenförmigen Elektroden aufweist, die in welchselseitiger Folge als Anode oder Katode wirkend und als Netzgitter aus mit Platin beschichtetem Titan oder einem anderen geeigneten Material ausgebildet sind, wobei die Elektroden über Stromzuführungsleitungen unter Zwischenschaltung einer eine Umpolung bewirkenden Steuerein richtung, wie Realais od.dgl., mit den Polen einer Stromquelle derart verbunden sind, daß zur Erzielung einer Grenzschichtenverwirbelung in wechselseitiger Folge die anodisch wirkenden Elektroden und die katodisch wirkenden Elektroden nach einer vorgegebenen Verweilzeit umgepolt werden, wobei die zunächst anodisch wirkenden Elektroden in katodisch wirkende Elektroden und die zunächst katodisch wirkenden Elektroden in anodisch wirkende Elektroden umgepolt werden, wobei sich in wechselnder Folge die Umpolungsvorgänge wiederholen.

Des weiteren wird die Aufgabe durch ein Verfahren zur Aufbereitung von Wasser, insbesondere zur Herstellung von keimfreiem Trinkwasser, durch anodische Oxidation erfindungsgemäß in der Weise gelöst, daß man das aufzubereitende Wasser in oder durch einen Reaktionsraum mit einer Anzahl von wechselweise angeordneten positiven und negativen Elektrodenplatten aus einem Netzgitter aus mit Platin beschichtetem Titan leitet, während des Verweilens der aufzubereitenden Wassermenge in dem Reaktionsraum ständing zur Ausbildung einer Grenzschichtenverwirbelung des erzeugten atomaren Sauerstoffs die Elektrodenplatten als Anode/Katode bzw. Katode/Anode umpolt und den Abstand der Elektrodenplatten voneinander den jeweiligen Wasserqualitäten (Leitfähigkeit) durch Abstandsveränderung anpaßt.

Die anodische Oxidation als elektrochemisches Aufbereitungsverfahren zur Dekontamination von Wasser erbringt folgende Vorteile:
- Infolge des erzielten hohen Oxidationspotentials erfolgt eine sichere Inaktivierung von Mikroorganismen,

- der Oxidationsprozeß kann mittels einfacher elektrotechnischer Regelungseinrichtungen automatisch umweltbezogen angepaßt werden,

- das Wasser wird nicht durch zusätzliche Chemikalien belastet und geschmacklich verändert,

- die Dekontamination bei hohem Volumendurchsatz kann dabei im kontinuierlichen Durchfluß erfolgen,

- es erfolgt keine Belastung durch Strahlung oder radioaktive Stoffe,

- es muß kein Überdruck aufgebaut werden,

- die Reaktionszellen, d.h. Elektroden, sind dabei selbstreinigend ausgelegt,

- die Investitionskosten mit dem Nutzwert bilden ein Optimum,

- das Wasser wird durch Redoxpotentialerhöhung haltbar gemacht und behält seine Keimfreiheit über einen längeren Zeitraum,

- das erhaltene Trinkwasser wird darüber hinaus durch eine Sauerstoffanreicherung geschmacklich verbessert.

Durch die Wahl des Elektroden-Materials , der Anordnung der Elektroden und durch die erfolgende Umpolung der Elektroden zur Ausbildung einer atomaren Grenzschichtenverwirbelung ist eine Vorrichtung und ein Verfahren geschaffen, mit dem hochqualitatives und insbesondere keimfreies Trinkwasser , insbesondere aus Rohwasser, herstellbar ist. Aufgrund der Möglichkeit, die Abstände der Anoden und Katoden zu verändern, ist eine Anpassung auf die verschiedensten Wasserqualitäten (Leitfähigkeit) möglich. Dadurch ist eine zuverlässig ablaufende Reaktion und eine hohe Entkeimungssicherheit gewährleistet. Da die Abstandsregulierung mechanisch vorgenommen werden kann, entfallen kostenaufwendige elektronische Steuerungen, was nicht ausschließt, daß auch die Abstandsregulierung elektronisch und selbsttätig in jeweiliger Anpassung an die vorhandenen Wasserqualitäten vorgenommen werden kann. Lediglich ein einmaliges Einstellen der Gesamtvorrichtung auf die notwendigen mA pro qcm ist erforderlich. Da die Oberflächen- und Fließgewässer der Erde immer genügend Natriumchlorid mit sich führen und die anodische Oxidation vom normalen PH-Wert kaum beeinflußt wird, ist die Regulierung der Abstände nicht nur von Bedeutung für die Anpassung an die verschiedenen Wasserqualitäten (Leitfähigkeit), sondern auch von Sicherheitsbedeutung. Durch Einhalten der jeweils erforderlichen Elektrodenabstände von z.B. 1,5 mm oder 2 mm , von entsprechenden Elektrodenflächen und einem entsprechenden Reaktionszellenvolumen bei vorgegebener Durchflußgeschwindigkeit ist eine einwandfreie anodische Oxidation gesichert. Besonders vorteilhaft ist die durch die ständig erfolgende Umpolung der Elektroden und die Form der verwendeten Elektroden in Form von Netzgittern erzielte Grenzschichtenverwirbelung , durch die sich der weitere Vorteil eines beschleunigten Sauerstoffabtransportes ergibt. Ist dagegen in einer Reaktionszelle der Abtransport des Sauerstoffes nicht gewährleistet, dann reduziert sich die Reaktionsfähigkeit der Zelle. Gerade durch die stark auftretende Verwirbelung in Verbindung mit der Form der Elektroden als Netzgitter ist ein optimales Ausspülen des Sauerstoffes möglich.

Der Umpolungsvorgang wird dabei durch ein in der Vorrichtung integriertes Relais oder eine andere geeignete Einrichtung gesteuert. Optimale Zeitinter valle sollten vorteilhaft durch vorangegangene Tests festgestellt werden. Hierbei ist eine zeitliche Obergrenze von der Geschwindigkeit abhängig, die ein Wassermolekül benötigt, um von der ersten Anode bis zur letzten Katode zu gelangen. Durch die ständige Umpolung ist eine hohe Treffsicherheit der Wassermoleküle auf die Elektroden erst möglich.

Die erfindungsgemäß ausgebildete Vorrichtung arbeitet wirtschaftlich und kostensparend, zumal die Vorrichtung bereits schon mit einer Spannung von 24 Volt Gleichstrom betreibbar ist.

Nach einer weiteren Ausgestaltung der Erfindung gemäß Anspruch 2 besteht das Gehäuse dr Vorrichtung aus einem behälterartigen Formkörper aus Kunststoff oder einem anderen geeigneten Material mit einer angeformten Bodenplatte und mit einer oberen Öffnung, die mittels eines lösbaren Deckelteils verschlossen ausgebildet ist, das den Wassereinlaufstutzen, den Wasseraustrittsstutzen und die Steuereinrichtung für das Umpolen der positiven und negativen Elektroden in negative und positive Elektroden aufweist.

Des weiteren sieht die Erfindung gemäß Anspruch 3 eine Ausgestaltung der Vorrichtung in der Weise vor, daß die in dem Innenraum des Gehäuses angeordnete Reaktionszelle vorzugsweise aus einem zylindrischen Gehäuse mit einer kreisförmigen, quadratischen oder einer anderen geeigneten geometrischen Querschnittsform besteht, dessen Abmessungen gegenüber den Innenabmessungen des Gehäuses zur Ausbildung des seitlichen Zwischenraumes und des bodenseitigen Zwischenraumes geringer sind und das mittels Schraubverbindungen , Steckverbindungen, Drehverbindungen od.dgl. an der Innenwand des Deckelteils des Gehäuses derart befestigt ist, daß die obere, dem Deckelteil zugewandte Öffnung der Reaktionszelle mit der Innenwandöffnung des Wasseraustrittsstutzens in dem Deckelteil korrespondiert, wobei der Wassereinlaufstutzen in den Zwischenraum zwischen der Reaktionszelle und dem Gehäuse mündet.

Die plattenförmigen Elektroden der Reaktionszelle sind waagerecht übereinanderliegend und in einem Abstand voneinander sowie parallel zueinander in der Reaktionszelle angeordnet, wobei zwischen je zwei plattenförmigen Elektroden ein die Elektroden in ihren Umfangsbereichen abschnittsweise übergreifender , vorzugsweise scheiben-oder ringförmiger Abstandshalter aus Gummi, Kunststoff oder einem anderen geeigneten Material angeordnet ist, wobei die die Elektroden haltenden Abstandshalter zu einem Formkörper zusammengefaßt sind, und zwar derart, daß eine Veränderung des Abstandes zwischen den einzelnen Elektroden mittels mechanischer Einrichtungen, wie Schraubspindeln od.dgl., durch Zug- oder Druckeinwirkung auf den Formkörper möglich ist, so daß bei einer entsprechenden Auslegung der mechanischen Zug- oder Druckeinrichtung die Abstände zwischen den einzelnen Elektroden gleichmäßig oder ungleichmäßig veränderbar sind.

Jede Elektrode steht mit einer Anzahl von Stromzuführungsleitungen mit einer Stromquelle unter Zwischenschaltung des Umpolungsrelais derart in Verbindung, daß wechselwiese positive und negative Elektroden ausbebildet werden, die ihre Polarität vermittels des Umpolungsrelais ständig wechseln können.

Weitere, zweckmäßige Ausgestaltungen der Erfindung sind Gegenstand der Unteransprüche.

Im folgenden wird der Gegenstand der Erfindung in de n Zeichnungen näher erläutert. Es zeigt

Fig. 1 teils in Ansicht, teils in einem senkrechten Schnitt die Wasseraufbereitungsvorrichtung,

Fig. 2 einen waagerechten Schnitt durch die Gesamtvorrichtung gemäß Linie II-II in Fig. 1,

Fig. 3 einen senkrechten Schnitt durch einen Abschnitt der Reaktionszelle mit im Abstand voneinander angeordneten plattenförmigen Elektroden und

Fig. 4 senkrechten Schnitt durch einen Abschnitt der Reaktionszelle mit in einem größeren Abstand voneinander angeordneten plattenförmigen Elektroden.

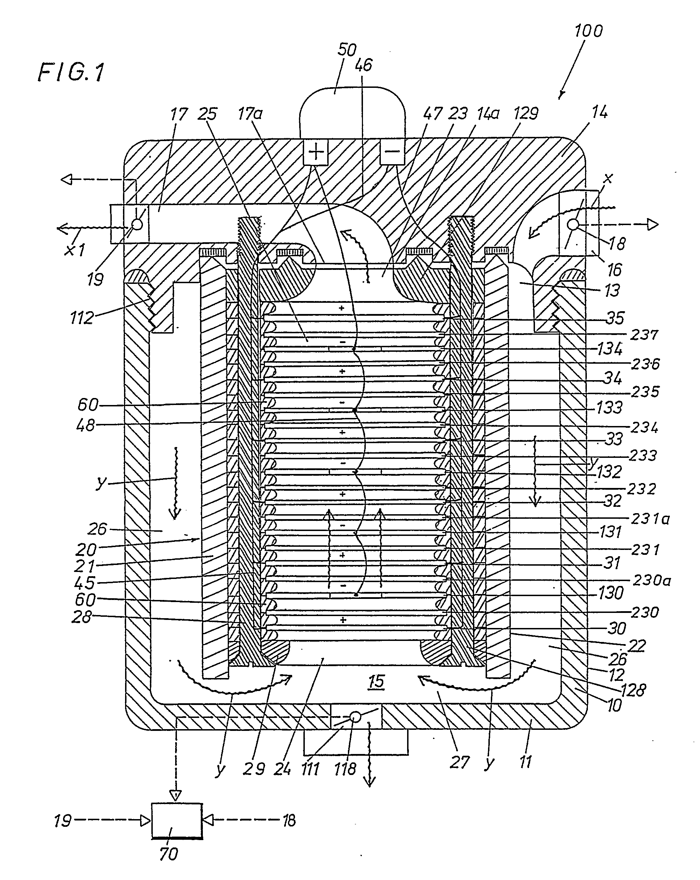

Die in Fig. 1 mit 100 bezeichnete Vorrichtung zur Aufbereitung von Wasser, insbesondere zur Herstellung von keimfreiem Trinkwasser, durch anodische Oxidation besteht aus einem behälterartig, allseitig geschlossen ausgebildeten Gehäuse 10, das einen kreisförmigen Querschnitt aufweist, wobei die Querschnittsform des Gehäuses 10 auch eine andere sein kann. Das Gehäuse 10 ist bodenseitig mittels einer Bodenplatte 11 verschlossen, die fester Bestandteil des Gehäuses ist. In der Bodenplatte 11 ist ein Abflußstutzen 111 vorgesehen, in dem ein Ventil 118 angeordnet ist. Die Seitenwand des Gehäuses 10 ist mit 12 bezeichnet.

Obenseitig ist das Gehäuse 10 der Vorrichtung 100 offen ausgebildet. Seine obere Öffnung 13 ist mittels eines lösbaren Deckelteils 14 verschlossen. Das Deckelteil 14 ist mit dem Gehäuse 10 vermittels einer Schraubverbindung 112 lösbar verbunden, wobei die Verbindung des Deckelteils 14 mit dem Gehäuse 10 auch über einen Bajonettverschluß oder eine andersartig ausgebildete Verschließvorrichtung erfolgen kann. Der Innenraum des Gehäuses 10 ist mit 15 bezeichnet.

Das Gehäuse 10 ist mit einem Wassereinlaufstutzen 16 und einem Wasseraustrittsstutzen 17 versehen, wobei in dem Wassereinlaufstutzen 16 ein Ventil 18 und in dem Wasseraustrittsstutzen 17 ein weiteres Ventil 19 angeordnet ist. Die Ventile 18,19,118 sind vorzugsweise als Elektromagnetventile ausgebildet und in einer Steuereinrichtung 70 zusammengeführt, vermittels der die Ventile 18,19,118 in Anpassung an die jeweils zu erfolgenden Arbeitsabläufe steuerbar sind. Der Zufluß des aufzubereitenden Wassers erfolgt über den Wassereinlaufstutzen 16 in Pfeilrichtung X und der Wasserabfluß über den Wasseraustrittsstutzen 17 in Pfeilrichtung X1 oder über den bodenseitigen Abflußstutzen 111.

Der Wassereinlaufstutzen 16 und der Wasseraustrittsstutzen 17 sind in dem Deckelteil 14 des Gehäuses 10 angeordnet, wie aus Fig. 1 ersichtlich, wobei die in der Innenwand 14a des Deckelteils 14 liegende Innenwandöffnung 17a des Wasseraustrittsstutzens 17 mittig im Innenraum 15 des Gehäuses 10 liegt.

In dem Innenraum 15 des Gehäuses 10 ist eine, die Reaktionskammer bildende Reaktionszelle 20 angeordnet, die aus einem zylindrischen Gehäuse 21 besteht, das einen kreisförmigen Querschnitt aufweist, wobei jedoch auch andere Querschnittsformen zur Anwendung gelangen können. Die Seitenwand des Gehäuses 21 der Reaktionszelle 20 ist mit 22 bezeichnet. Das Gehäuse 21 ist beidseitig offen ausgebildet, wobei die obere Öffnung bei 23 und die bodenseitige Öffnung bei 24 in Fig. 1 angedeutet sind. Der Innenraum 25 der Reaktionszelle 20 bildet die Reaktionskammer.

Die Reaktionszelle 20 ist senkrecht stehend in dem Innenraum 15 des Gehäuses 10 angeordnet und wird an der Innenseite des Deckelteils 14 an diesem vermittels Befestigungs- und/oder Spannschrauben 28 , 128 gehalten, wobei jedoch auch anstelle von Schraubverbin-dungen Steckverbindungen oder Drehverbindungen oder andere geeignete Verbindungseinrichtungen vorgesehen sein können. Die in Fig. 1 bei 28, 128 angedeuteten Befestigungsschrauben zur Halterung der Reaktionszelle 20 an dem Deckelteil 14 des Gehäuses 10 sind durch Druchbohrungen in der Seitenwand 22 des Gehäuses 21 der Reaktionszelle 20 hindurchgeführt. Diese Längsdurchbohrungen für die Aufnahme der Befestigungsschrauben in der Seitenwand 22 des Gehäuses 21 richtet sich jeweils nach der Größe der Reaktionszelle 20.

Die obere Öffnung 23 und die bodenseitige Öffnung 24 in dem Gehäuse 21 der Reaktionszelle 20 sind vorzugsweise in Abschlußplatten 29,129 ausgebildet, vermittels der das Gehäuse 21 beidseitig abgedeckt ist, so daß die Öffnungen 23,24 sich nicht über den gesamten Querschnitt des Gehäuses 21 der Reaktionszelle 20 erstrecken.

Die Gesamtanordnung und somit Befestigung der Reaktionszelle 20 an dem Deckelteil 14 ist derart, daß die obere Öffnung 23 der Reaktionszelle 20 mit der Innenwandöffnung 17a des Wasseraustrittsstutzens 17 in dem Deckelteil 14 korrespondiert, so daß aus der Reaktionskammer 25 der Reaktionszelle 20 strömendes Wasser über die obere Öffnung 23 in den Wasseraustrittsstutzen 17 gelangen kann. Zwischen der Innenwand 14a des Deckelteils 14 und dem oberen umlaufenden Rand des Gehäuses 21 sind Dichtungen aus geeignetem Material angeordnet, damit ein flüssigkeitsdichter Anschluß der Reaktionszelle 20 an das Deckelteil 14 des Gehäuses 10 gewährleistet ist.

Die Abmessungen der in dem Innenraum 15 des Gehäuses 10 angeordneten Reaktionszelle 20 sind derart, daß ein seitlicher Zwischenraum 26 und ein bodenseitiger Zwischenraum 27 ausgebildet sind. Hierzu weist das Gehäuse 21 Reaktionszelle 20 gegenüber den Abmessungen des Innenraumes 15 des Gehäuses 10 kleinere Abmessungen auf. Die innenwandseitige Öffnung des Wassereinlaufstutzens 16 mündet dann in diesen seitlichen Zwischenraum 26, so daß das aufzubereitende Wasser in Pfeilrichtung Y zwischen der Seitenwand 22 der Reaktionszelle 20 und der Seitenwand 12 des Gehäuses 10 und durch die Reaktionskammer 25 der Reaktionszelle 20 hindurchströmen kann.

Die Reaktionszelle 20 weist in ihrem Innenraum 25 eine Anzahl von zueinander elektrisch isolierten, waagerechten , plattenförmigen Elektroden 30,31,32,33, 34,35 und 130,131,132,133,134 auf. Bei dem in Fig. 1 dargestellten Ausführungsbeispiel sind elf plattenförmige Elektroden vorgesehen, wobei die Anzahl der Elektroden nicht auf elf Elektroden beschränkt zu sein braucht. Die Anzahl der Elektroden wird sich jeweils nach der Größe der Reaktionszelle 20 und dem Durchflußvolumen richten.

Bei dem in Fig. 1 dargestellten Ausführungsbeispiel stellen die Elektroden 30 bis 35 jeweils die Anoden dar, während die Elektroden 130 bis 134 die Katoden bilden.

Die Elektroden 30 bis 35 und 130 bis 134 sind in einem Abstand voneinander angeordnet, wobei der Abstand von vornherein festgelegt und vorgegeben sein kann, wobei jedoch auch die Möglichkeit besteht, den Abstand der Elektroden zueinander zu verändern, worauf nachstehend noch näher eingegangen wird.

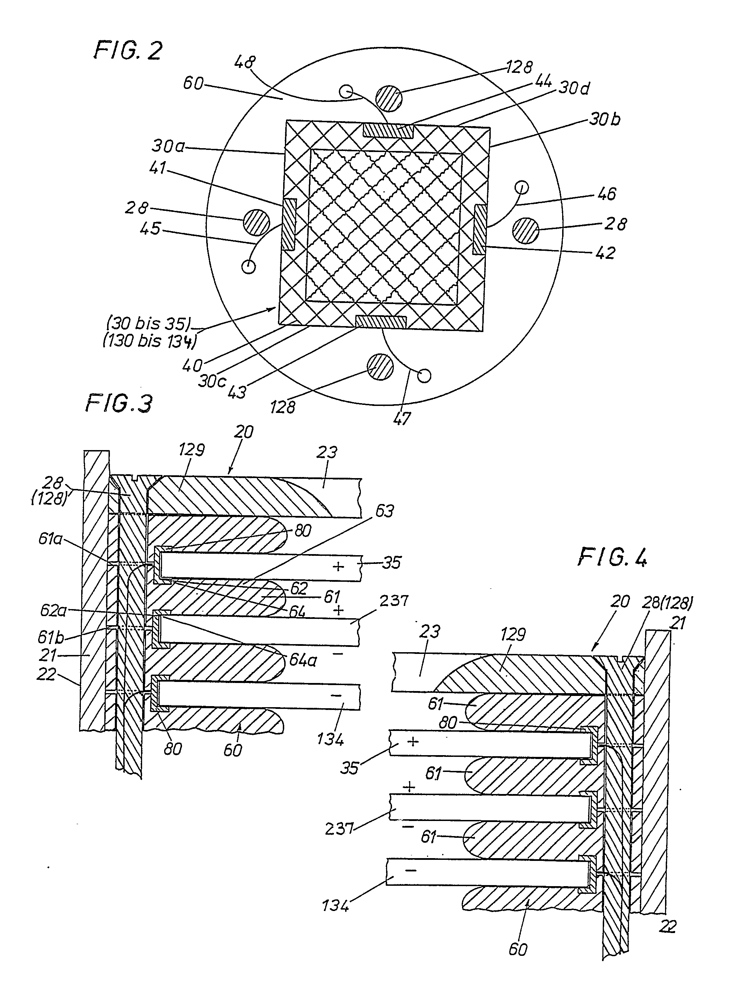

Jede Elektrode 30 bis 35 und 130 bis 134 ist als Netzgitter 40 ausgebildet und besteht aus mit Platin beschichtetem Titan ode einem anderen geeigneten Material (Fig.2). Anstelle eines Netzgitters 40 kann auch jede Elektrode aus einem mit einer entsprechenden Anzahl von Durchbrechungen versehen plattenförmigen Zuschnitt bestehen, der ebenfalls aus mit Platin beschichtetem Titan besteht.

Bei dem in Fig. 1 gezeigten Ausführungsbeispiel besteht die Elektrode 30 - die weiteren Elektroden 31 bis 35 und 130 bis 134 sind entsprechend der Elektrode 30 ausgebildet - aus einem quadratischen Netzgitter 40, wobei das Netzgitter 40 auch eine andere Form aufweisen kann. Die vier Seiten des Netzgitters 40 sind mit 30a, 30b,30c,30d bezeichnet. An jeder der vier Seiten 30a, 30b, 30c,30d ist das Netzgitter 40 mit einem Stromanschlußkontakt 41,42,43,44 versehen, wobei je zwei Stromanschlußkontakte sich gegenüberliegend sind. Die Stromanschlußkontakte 41, 42 und die Stromanschlußkontakte 43,44 stehen sich gegenüber.

Jeder Stromanschlußkontakt 41,42,43,44 ist über eine Stromzuführungsleitung mit einer in der Zeichnung nicht dargestellten Gleichstromquelle verbunden. Die Stromanschlußkontakte 41,42 sind mit den Stromzuführungsleitungen 45,46 verbunden, wobei vor der Stromquelle in die Stromzuführungsleitungen eine Steuereinrichtung, wie z.B. ein in an sich bekannter Weise ausgebildetes Relais 50,zur Umsteuerung der Polarität der Elektroden 30 bis 35 und 130 bis 134 eingeschaltet ist.

Die Stromanschlußkontakte 41,42 des Netzgitters 40 der Elektrode 30 sind mit den Stromzuführungsleitungen 45,46 verbunden, die an den Pluspol des Relais 50 angeschlossen sind, während die Stromanschlußkontakte 43,44 and die Stromzuführungsleitungen 47,48 angeschlossen sind, die mit dem Minuspol des Relais 50 verbunden sind. Die Anzahl der Stromzuführungsleitungen wird sich jeweils nach der Größe der eingesetzten Netzgitter 40 richten. Neben je einer zum Pluspol und zum Minuspol des Relais 50 führenden Stromzuführungsleitung können auch mehrere Stronmzuführungsleitungen Verwendung finden. Die Verbindung der Stromzuführungsleitungen mit den Netzgittern 40 aller Elektroden mit dem Relais 50 ist derart, daß ein ständiges, über das Relais gesteuertes Umpolen der Elektroden möglich ist, worauf nachstehend noch näher eingegangen wird.

Bei dem in Fig. 1 gezeigten Ausführungsbeispiel sind die Elektroden 30 bis 35 mit dem Pluspol des Relais 50 verbunden, so daß diese Elektroden 30 bis 35 jeweils die Anoden bilden, während die Elektroden 130 bis 134 über die entsprechenden Stromzuführungsleitungen mit dem Minuspol des Relais 50 verbunden sind, so daß die Elektroden 130 bis 134 die Katoden darstellen. Vermittels des Relais 50 wird die Polarität der Elektroden 30 bis 35 und 130 bis 134 derart umgesteuert, daß die zunächst als Anoden wirkenden Elektroden 30 bis 35 mit dem Minuspol des Relais 50 über die entsprechenden Stromzuführungsleitungen verbunden sind und somit zu Katoden werden, während die zunächst katodisch wirkenden Elektroden 130 bis 134 über die entsprechenden Stromzuführungsleitungen mit dem Pluspol des Relais 50 verbunden sind und somit dann zu den Anoden werden.Diese Umsteuerung der Polarität der Elektroden 30 bis 35 und 130 bis 134 kann in kurzer , jedoch auch in längerer Zeitfolge erfolgen und kann mittels entsprechend ausgebildeter Einrichtungen vorgegeben werden.

Die Elektroden 30 bis 35 und 130 bis 134 sind vermittels scheiben- oder ringförmiger Abstandshalter 60 in einem vorgegebenen Abstand voneinander gehalten, wobei zwischen je zwei plattenförmigen Elektroden 30,130 und 130, 31 und 31,131 und 131,32 und 32,132 und 132,33 und 33, 133 und 133,34 und 34,134 und 134,35 je ein, die Elektroden in ihren Umfangsbereichen abschnittsweise übergreifender Abstandshalter 60 aus Gummi, Kunststoff oder einem anderen geeigneten Material angeordnet ist, in dem je eine zu je zwei Elektroden 30,130; 130,31;31,131;131,32; 32,132;132,33;33,133;133,34;34,134;134,35 in einem vorgegebenen Abstand gehaltene Zwischenelektrode 230;230a; 231;231a;232;233;234;235;236;237 angeordnet ist, die den gleichen Aufbau die die Elektroden 30 bis 35 und 130 bis 134 aufweist und zu den anderen Elektroden und Zwischenelektroden elektrisch isoliert ist.Dabei können alle Abstandshalter 60 zu einem Formkörper zusammengefaßt sein, der als Hohlzylinder ausgebildet ist und dessen Innenwandfläche eine Anzahl von parallel zueinander verlaufenden Ringnuten zur Aufnahme der Elektroden 30 bis 35 und 130 bis 134 aufweist, wobei dieser Formkörper vorzugsweise aus einem federnd-elastischen Material besteht. Aus diesem Material kann auch jeder einzelne Abstandshalter 60 bestehen. Die federnd-elastische Ausgestaltung des Formkörpers ermöglicht das einzelne Einsetzen der plattenförmigen Elektroden 30 bis 35 und 130 bis 134 in die entsprechend an der Innenwandfläche des Formkörpers ausgebildeten Ringnuten. Es besteht darüber hinaus auch die Möglichkeit, den Formkörper zweigeteilt oder viergeteilt auszubilden, so daß dann die Netzgitter 40, die die Elektroden bilden, mit ihren Seiten 30a,30b,30c,30d in die entsprechenden Ringnuten der einzelnen Formkörperteile eingreifen. Der Formkörper selbst ist in dem Gehäuse 21 der Reaktionszelle 20 fest angeordnet und vorzugsweise an der Innenwandfläche der Seitenwand 22 des Gehäuses 21 befestigt.

Wie insbesondere Fig. 3 und 4 zeigen, ist eine Vielzahl von übereinanderliegend angeordneten Abstandshaltern 60 vorgesehen, wobei jeder Abstandshalter 60 aus einem ringförmigen Formkörper 61 besteht, dessen obere und untere Wandfläche 61a,61b unter Ausbildung je eines stufenförmigen Abschnittes 62,62a in einen schmäleren, innenliegenden, zungenförmigen Abschnitt 63 übergeht, wobei oben- und untenseitige Ausnehmungen 64,64a ausgebildet sind, so daß durch aufeinanderliegende Anordnung von je zwei Formkörpern 61 eine ringförmige Aufnahmenut für die Elektrode gebildet ist. Bestehen die Abstandshalter 60 nicht aus elektrisch leitendem Material, dann ist es vorteilhaft, wenn die einzelnen, die Elektroden bildenden Netzgitter 40 von U-förmigen Halterungen 80 umgriffen werden und vermittels dieser Uförmigen Halterungen 80 in den von den Abstandshaltern 60 gebildeten Ringnuten oder Haltenuten angeordnet sind. Diese U-förmigen Halterungen 80 bestehen dann aus elektrisch leitenden Materialien. Es besteht jedoch auch die Möglichkeit, den Abstandshaltern 60 eine andere als voranstehend beschriebene Form zu geben. Die U-förmigen, an den Netzgittern 40 angebrachten Halterungen können auch als Stromzuführungskontakte ausgebildet sein und sind dann mit den Stromzuführungsleitungen verbunden. Das die Umpolung bewirkende Relais 50 weist vorzugsweise vier Ausgangspole auf, nämlich zwei Minuspole und zwei Pluspole, so daß die Elektroden, die als Anode wirken sollen, dann über die Stromzuführungsleitungen 45,46 mit dem einen Pluspol des Relais 50 verbunden sind, während die Elektroden, die die Katoden bilden, dann über die Stromzuführungs-leitungen 47,48 mit dem Minuspol des Relais 50 verbunden sind. Die beiden anderen Pole des Relais 50 , nämlich der weitere Minuspol und der weitere Pluspol , sind dann über weitere Stromzuführungsleitungen so mit den Netzgittern 40 der Elektroden verbunden, daß die als Anoden zunächst wirkenden Elektroden über entsprechende Stromzuführungsleitungen mit dem Minuspol des Relais 50 ver bunden werden und somit zu Katoden werden, während die vorher als Katode wirkenden Elektroden über entsprechende Stromzuführungsleitungen mit dem Pluspol des Relais 50 verbunden sind, so daß die als Katoden zunächst wirkenden Elektroden zu Anoden werden.

Der Abstand zwischen den Elektroden 30 bis 35 und 130 bis 134 kann feststehend, d.h. unveränderbar, sein und ist dann vorgegeben durch die Stärke der Abstandhalter 60, die zwische je zwei Elektroden angeordnet sind. Nach einer weiteren Ausführungsform ist eine Abstandsveränderung möglich, was mittels mechanischer Einrichtungen, wie Schraubspindeln od.dgl. , durchführbar ist. Wesentlich ist, daß solche mechanischen Mittel eingesetzt werden, die ein Zusammendrücken und Ausdehnen der Abstandshalter ermöglichen , um den Abstand zwischen je zwei Elektroden verändern zu können. Bestehen die Abstandshalter 60 oder die Abstandshalter bildende Formkörper aus federndelastischen Werkstoffen, dann ist zur Verringerung der Abstände zwischen den jeweiligen Elektroden ein Zusammenpressen der Abstandshalter 60 möglich, so daß dann bei einer Aufhebung eines Druckes auf die Abstandshalter sich diese aufgrund des gegebenen Rückstellvermögens in ihre Ausgangsposition zurückbewegen, wobei gleichzeitig wiederum eine Abstandsvergrößerung erfolgt, wobei das Maß der Rückstellung und somit die Größe der Abstandsveränderung, z.B. vermittels Schrauben,steuerbar ist. Die in unterschiedlichen Abständen angeordneten Elektroden sind in den Fig. 3 und 4 dargestellt.

Das Gehäuse 10 der Vorrichtung 100 besteht aus Kunststoff oder einem anderen geeigneten Material.

Die Vorrichtung 100 arbeitet wie folgt:

Bei geöffnetem Ventil 18 und geschlossenem Ventil 118 strömt in den Innenraum 15 des Gehäuses 10 aufzuberei tendes Wasser, welches auch in die Reaktionskammer 25 der Reaktionszelle 20 gelangt. Um zu gewährleisten, daß der gesamte Innenraum des Gehäuses 10 und somit auch die Reaktionskammer 25 der Reaktionszelle 20 vollständig mit Wasser gefüllt ist, ist es erforderlich, daß beim Einströmen des Wassers in das Gehäuse 10 auch das weitere Ventil 19 geschlossen ist. Es ist vorteilhaft, wenn die konstruktive Ausgestaltung derart ist, daß die beiden Ventile 18,19 zumindest in gleicher Höhe, d.h. in gleicher Ebene, angeordnet sind, wobei auch die Möglichkeit besteht, daß das Ventil 19 oberhalb des Ventils 18 angeordnet ist d.h. der Wasseraustrittsstutzen 17 ist dann oberhalb des Wassereinlaufstutzens 16 in dem Deckelteil 14 des Gehäuses 10 angeordnet. Ist das Gehäuse 10 und somit auch die Reaktionskammer 25 vollständig mit aufzubereitendem Wasser gefüllt, dann wird das Ventil 19 durch den Wasserdruck geöffnet. Hieraufhin wird durch die Leitfähigkeit des Wassers die anodische Oxidation des Wassers ausgelöst, wobei gleichzeitig vermittels des Relais 50 eine ständige Umpolung der Elektroden erfolgt. Nach Beendigung des Entkeimungsvorganges wird das Ventil 19 geschlossen, so daß sich das Ventil 18 schließt und es öffnet sich das Ventil 118, um das in der Reaktionszelle 20 verbliebene und gereinigte Wasser über den Abflußstutzen 111 ableiten zu können, wobei für eine vollständige Entleerung dadurch Sorge getragen wird, daß z.B. das Ventil 19 geöffnet wird. Hierauf kann die Vorrichtung 100 erneut in Betrieb genommen werden.

Der Abstand zwischen den Elektroden, d.h.

zwischen den Anoden und den Katoden , ist über die erwähnten mechanischen Einrichtungen , wie z.B. Stellschrauben, regulierbar, wodurch eine Anpassung an die Leitfähigkeit des aufzubereitenden Wassers möglich ist. Dadurch ist es möglich, daß die Vorrichtung 100 ohne Probleme überall dort eingesetzt werden kann, wo eine Aufbereitung von Wasser erforderlich ist und gewünscht wird. Eine Anpassung der Vorrichtung 100 und insbesondere der Reaktionszelle 20 an die Leitfähigkeit des aufzubereitenden Wassers kann auch über eine Strom- oder Spannungserhöhung erfolgen.

Die Umpolung der Elektroden 30 bis 35 und 130 bis 134 erfolgt ständig während des Verweilens der aufzubereitenden Wassermenge in der Reaktionskammer 25.Dabei ergeben sich an den Zwischenelektroden 230 bis 237 jeweils auf einer Seite anodische und auf der anderen Seite katodische Prozesse, wobei sich bei einer Umpolung ein schlagartiger Wechsel der Polarisierung ergibt.

## Ansprüche

1. Vorrichtung zur Aufbereitung von Wasser, insbesondere zur Herstellung von keimfreiem Trinkwasser, durch anodische Oxidation, dadurch gekennzeichnet, daß die Vorrichtung (100) aus einem behälterartigen, allseitig geschlossenen Gehäuse (10), das mit einem Wassereinlaufstutzen (16), mit einem Wasserauslaufstutzen (17) und mit einem Wasserablaufstutzen (118) versehen ist, wobei der Wassereinlaufstutzen (16), der Wasseraustrittsstutzen (17) und der Wasserablaufstutzen (118) mit je einem , den Wasserzulauf und Wasserablauf steuerbaren Ventil (18.19,118) versehen sind, und einer in dem Innenraum (15) des Gehäuses (10) senkrecht stehend angeordneten, beidseitig offen ausgebildeten, in ihrem Innenraum (25) eine Reaktionskammer bildenden Reaktionszelle (20) besteht, die als beidseitig offenes, röhrenförmiges Gehäuse (21) ausgebildet ist und deren obere Öffnung (23) mit dem Wasseraustrittsstutzen (17) verbunden ist, wobei die Reaktionszelle (20) in dem Innenraum (25) des Gehäuses (10) unter Ausbildung eines seitlichen und bodenseitigen Zwischenraumes (26,27) angeordnet ist, und daß die Reaktionszelle (20) in ihrem Innenraum (25) eine Anzahl von zueinander elektrisch isolierten und in feststehenden oder veränderbaren Abständen voneinander angeordneten waagerechten, plattenförmigen Elektroden (30,31,32,33,34,35; 130,131,132,133,134) aufweist, die in wechselseitiger Folge als Anode oder Katode wirkend und als Netzgitter (40) aus mit Platin beschichtetem Titan oder einem anderen geeigneten Materials ausgebildet sind, wobei die Elektroden (30 bis 35; 130 bis 134) über Stromzuführungsleitungen (45,46;47,48) unter Zwischenschaltung einer eine Umpolung bewirkenden Steuer einrichtung (50), wie Relais od.dgl., mit den Polen einer Stromquelle derart verbunden sind, daß zur Erzielung einer Grenzschichtenverwirbelung in wechselseitiger Folge die anodisch wirkenden Elektroden (30 bis 35) und die katodisch wirkenden Elektroden (130 bis 134) vorzugsweise nach einer vorgegebenen Verweilzeit umgepolt werden, wobei die zunächst anodisch wirkenden Elektroden (30 bis 35) in katodisch wirkende Elektroden und die zunächst katodisch wirkenden Elektroden (130 bis 134) in anodisch wirkende Elektroden umgepolt werden, wobei sich in wechselnder Folge die Umpolungsvorgänge wiederholen.

2. Vorrichtung nach Anspruch 1, dadurch gekennzeichnet, daß das Gehäuse (10) der Vorrichtung (100) aus einem behälterartigen Fromkörper aus Kunststoff oder einem anderen geeigneten Material mit einer angeformten Bodenplatte (11) und mit einer oberen Öffnung (13) besteht, die mittels eines lösbaren Deckelteils (14) verschlossen ausgebildet ist, das den Wassereinlaufstutzen (16) , den Wasseraustrittsstutzen (17) und die Steuereinrichtung (50) für das Umpolen der positiven und negativen Elektroden (30 bis 35; 130 bis 134) in negative und positive Elektroden aufweist.

3. Vorrichtung nach Anspruch 1 und 2, dadurch gekennzeichnet, daß die in dem Innenraum (15) des Gehäuses (10) angeordnete Reaktionszelle (20) vorzugsweise aus einem zylindrischen Gehäuse (21) mit einer kreisförmigen, quadratischen oder einer anderen geeigneten geometrischen Querschnittsform besteht, dessen Außenabmessungen gegenüber den Innenabmessungen des Gehäuses (10) zur Ausbildung des seitlichen Zwischenraumes (26) und des bodensei tigen Zwischenraumes (27) geringer sind und das mittels Schraubverbindungen, Steckverbindungen, Drehverbindungen od.dgl. (28,128) an der Innenwand (14a) des Deckelteils (14) des Gehäuses (10) derart befestigt ist, daß die obere , dem Deckelteil (14) zugewandte Öffnung (23) der Reaktionszelle (20) mit der Innenwandöffnung (17a) des Wasseraustrittsstutzens (17) in dem Deckelteil (14) korrespondiert, wobei der Wassereinlaufstutzen (16) in den Zwischenraum (26) zwischen der Reaktionszelle (20) und dem Gehäuse (10) mündet und der Wasserabflußstutzen (118) am Boden des Gehäuses (10) angeordnet ist.

4. Vorrichtung nach Anspruch 1 bis 3, dadurch gekennzeichnet, daß die plattenförmigen Elektroden (30 bis 35; 130 bis 134) der Reaktionszelle (20) waagerecht übereinanderliegend und in einem Abstand voneinander sowie parallel zueinander in der Reaktionszelle (20) angeordnet sind, daß zwischen je zwei plattenförmigen Elektroden (30,130; 130,31;31,131;131,32; 32,133; 133,34; 34,134; 134,35) ein die Elektroden in ihren Umfangsbereichen abschnittsweise übergreifender, vorzugsweise scheiben- oder ringförmiger Abstandshalter (60) aus Gummi, Kunststoff oder einem anderen geeigneten,stromnichtleitenden Material angeordnet ist.

5. Vorrichtung nach Anspruch 4, dadurch gekennzeichnet, daß die Abstandshalter (60) zu einem Formkörper zusammengefaßt sind, der als Hohlzylinder ausgebildet ist und dessen Innenwandfläche eine Anzahl von parallel zueinander verlaufenden Ringnuten zur Aufnahme der Elektroden (30 bis 35; 130 bis 134) aufweist, wobei der Formkörper vorzugsweise aus einem federnd-elastischen Material , wie Gummi, Kunststoff od.dgl. besteht.

6. Vorrichtung nach Anspruch 5, dadurch gekennzeichnet, daß der Formkörper mit den Halterungen zur Aufnahme der Elektroden (30 bis 35; 130 bis 134) in Längsrichtung mehrgeteilt ausgebildet ist.

7. Vorrichtung nach Anspruch 1 bis 4, dadurch gekennzeichnet, daß jeder Abstandshalter (60) aus einem ringförmigen Formkörper (61) besteht, dessen obere und untere waagerechte Wandfläche (61a,61b) unter Ausbildung je eines stufenförmigen, eingezogenen Abschnittes (62,62a) in einen schmäleren, innenliegenden, zungenförmigen Abschnitt (63) übergeht, wobei oben- und untenseitige Ausnehmungen (64,64a) ausgebildet sind, so daß durch aufeinanderliegende Anordnung von je zwei Formkörpern (61) eine ringförmige Aufnahmenut für die Elektrode (30 bis 35; 130 bis 134) gebildet ist.

8. Vorrichtung nach Anspruch 5 bis 7, dadurch gekennzeichnet, daß der Fromkörper oder die Formkörper (61) zur Veränderung des Abstandes zwischen den inzelnen Elektroden (30 bis 35; 130 bis 134) mittels mechanischer Einrichtungen, wie Schraubspindeln, Klemmschrauben od.dgl., derart zusammendrückbar oder dehnbar ist, daß bei Zug- oder Druckeinwirkung auf den Formkörper oder die Formkörper (61) über den gesamten Bereich der Reaktionszelle (20) gleiche Abstände zwischen den Elektroden (30 bis 35; 130 bis 134) ausgebildet werden.

9. Vorrichtung nach Anspruch 1 bis 8, dadurch gekennzeichnet, daß jede positive Elektrode (30 bis 35) über mindestens eine Stromzuführungsleitung (41;42) mit dem Pluspol der Stromquelle und jede negative Elektrode (130 bis 134) über mindestens eine Stromzuführungsleitung (43;44) mit der Stromquelle verbunden ist, und daß jede positive Elektrode (30 bis 35) über mindestens eine weitere Stromzuführungsleitung mit dem Pluspol der Stromquelle und jede negative Elektrode (130 bis 134) über mindestens eine weitere Stromzuführungsleitung mit dem Pluspol der Stromquelle verbunden ist, wobei die Stromzuführungsleitungen derart in der der Stromquelle vorgeschalteten Steuereinrichtung (50) zusammengeführt sind, daß die Elektroden (30 bis 35; 130 bis 134) ständig umpolbar sind.

10. Vorrichtung nach Anspruch 1 bis 9, dadurch gekennzeichnet, daß der Abflußstutzen (111) mit dem Ventil (118) in der Bodenplatte (11) des Gehäuses (10) angeordnet ist, wobei vorzugsweise die Ventile (18,19,118) als Elektromagnetventile ausgebildet und in einer gemeinsamen Steuereinrichtung (70) zusammengeführt sind.

11. Vorrichtung nach Anspruch 1 bis 10, dadurch gekennzeichnet, daß jede plattenförmige Elektrode (30 bis 35; 130 bis 134;40) eine quadratische oder rechteckförmige Form aufweist und an ihren jeweils gegenüberliegenden Seiten (30a,30b,30c,30d) Stromanschlußkontakte (41,42,43,44) aufweist, von denen die sich gegenüberliegenden Stromanschlußkontakte (41,42) and die aum Pluspol der Stromquelle geführten Stromzuführungsleitungen (45,46) und die beiden anderen Stromanschlußkontakte (43,44) and die zum Pluspol der Stromquelle geführten Stromzuführungsleitungen (47,48) angeschlossen sind.

12. Vorrichtung nach Anspruch 1 bis 10, dadurch gekennzeichnet, daß die der Stromquelle vorgeschaltete Steuereinrichtung , wie Relais od. dgl. (50) zwei Pluspole und zwei Minuspole aufweist, an die die Stromzuführungsleitungen (45,46,47,48) der Elektroden (30 bis 35; 130 bis 134) angeschlossen sind, wobei jede positive Elektrode (30 bis 35) über die Stromzuführungsleitung (45) mit dem ersten Pluspol der Steuereinrichtung (50) und über die weitere Stromzuführungsleitung (46) mit dem zweiten Minuspol der Steuereinrichtung (50) und die negativen Elektroden (130 bis 134) über die Stromzuführungsleitung (47) mit dem ersten Minuspol der Steuereinrichtung (50) und über die weitere Stromzuführungsleitung (48) mit dem zweiten Pluspol der Steuereinrichtung (50) verbunden sind.

13. Verfahren zur Aufbereitung von Wasser, insbesondere zur Herstellung von keimfreiem Trinkwasser, durch anodische Oxidation, dadurch gekennzeichnet, daß man das aufzubereitende Wasser in oder durch einen Reaktionsraum mit einer Anzahl von wechselweise angeordneten positiven und negativen Elektrodenplatten aus einem Netzgitter aus mit Platin beschichtetem Titan leitet , während des Verweilens der aufzubereitenden Wassermenge in der Reaktionskammer ständig zur Ausbildung einer Grenzschichtverwirbelung des erzeugten atomaren Sauerstoffs die Elektrodenplatten als Anode/Katode bzw. Katode/Anode umpolt und den abstand der Elektrodenplatten voneinander den jeweiligen Wasserqualitäten (Leitfähigkeiten) durch Abstandsveränderung anpaßt.

FIG.1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 001 285  (INSTITUT FÜR BIOMEDIZINISCHE TECHNIK) * Seite 2, Zeilen 16-23; Seite 3, Zeilen 4-11,23-31; Seite 4, Zeile 25 – Seite 5, Zeile 7; Seite 6, Zeilen 3-6; Figuren 1-3; Ansprüche 1-6,10 * | 1-4,6,9 | C 02 F    1/46 |
| A | --- | 13 | |
| Y | EP-A-0 165 357  (E.I.F. ECOLOGIE) * Ansprüche 1,2; Figuren; Seite 1, Zeilen 4-11; Seite 3, Zeilen 20-30; Seite 4, Zeilen 4-15; Seite 5, Zeilen 1-8; Seite 6, Zeilen 19-33; Seite 7, Zeilen 3-8 * | 1-4,6 | |
| A | --- | 13 | |
| Y | FR-A-2 224 207  (SAINT-GOBAIN) * Seite 1, Zeilen 7-18; Seite 3, Beispiel 1; Ansprüche 1,4 * | 1-4,6 | |
| A | --- | 13 | |
| A | DE-A-2 929 043  (REIS) * Ansprüche 1,2; Seite 3 - Seite 4, Absatz 2; Figuren 2,3 * | 3,4,6 | |
| A | EP-A-0 010 562  (SORAPEC) * Ansprüche 1,3,5,10 * ----- | 3,4 | |

**RECHERCHIERTE SACHGEBIETE (Int. Cl.4)**

C 02 F

Der vorliegende Recherchenbericht wurde für alle Patentansprüche erstellt

| Recherchenort | Abschlußdatum der Recherche | Prüfer |
|---|---|---|
| DEN HAAG | 04-02-1988 | KASPERS H.M.C. |